# EUROPEAN PATENT APPLICATION

(11) **EP 3 179 749 A1**
(43) Date of publication of application: **14.06.2017**
(21) Application number: 16202755.1
(22) Date of filing: 07.12.2016
(51) Int. Cl.: H04W 4/04, H04W 64/00

(54) **DEVICE DISPLAYING METHOD AND APPARATUS, COMPUTER PROGRAM AND RECORDING MEDIUM**

(30) Priority: 11.12.2015 CN 201510920990
(71) Applicant: Xiaomi Inc., Beijing 100085 (CN)
(72) Inventor: HOU, Enxing, Haidian District, Beijing 100085 (CN); DAI, Long, Haidian District, Beijing 100085 (CN); GAO, Ziguang, Haidian District, Beijing 100085 (CN)
(74) Representative: Reeve, Nicholas Edward

(57) **Abstract**

A device displaying method and apparatus, a computer program and a recording medium, which pertain to the field of computer technology. The method comprises: acquiring a terminal's position; querying a device group corresponding to the position, the device group being obtained after all smart devices bound with the terminal are grouped; and displaying device information of each smart device in the queried device group. It addresses the difficulty in managing device information when all device information is displayed, and simplifies the management of device information.

## Description

### TECHNICAL FIELD

The present invention is related to the field of computer technology, and more particularly to a device displaying method and apparatus, a computer program and a recording medium.

### BACKGROUND

With the popularization of smart devices, the number of smart devices in a user's home is increasing. The user needs to display smart devices by an application installed in a terminal and manage the smart devices.

A device displaying method provided by the related art includes: each smart device periodically broadcasting its device information; and a terminal, after receiving the device information from each smart device, displaying the same. However, after the device information of all devices is displayed, it is difficult to manage all the device information.

### SUMMARY OF THE INVENTION

To address the problem of the related art, the present invention provides a device displaying method and apparatus, a computer program and a recording medium as below.

According to a first aspect of embodiments of the present invention, there is provided a device displaying method, comprising: acquiring a terminal's position; querying a device group corresponding to the position, the device group being obtained after all smart devices bound with the terminal are grouped; and displaying device information of each smart device in the queried device group.

Optionally, the method further comprises: acquiring device information of all smart devices bound with the terminal; dividing a predetermined area into at least two sub-areas, and establishing a device group for each sub-area, all smart devices being located in the predetermined area; and for each sub-area, adding device information of one or more of the smart devices which are located in the sub-area into a device group corresponding to the sub-area.

Optionally, querying the device group corresponding to the position comprises: determining a sub-area including the position; and querying the device group corresponding to the sub-area.

Optionally, determining the sub-area including the position comprises: determining a smart device whose distance from the position is less than a predetermined distance threshold; acquiring a sub-area corresponding to the smart device; and determining the acquired sub-area as the sub-area including the position.

Optionally, the method further comprises: adding all of at least one remaining device group to a label, and displaying the label; or generating a label for each remaining device group, and displaying each label.

Optionally, the method further comprises: receiving an operation acting on a label; and displaying device information of each smart device in the device group corresponding to the label.

According to a second aspect of the embodiments of the present invention, there is provided a device displaying apparatus, comprising: a position acquiring module configured to acquire a terminal's position; a group querying module configured to query a device group corresponding to the position acquired by the position acquiring module, the device group being obtained after all smart devices bound with the terminal are grouped; and a first displaying module configured to display device information of each smart device in the device group queried by the group querying module.

Optionally, the apparatus further comprises: an information acquiring module configured to acquire device information of all smart devices bound with the terminal; an area dividing module configured to divide a predetermined area into at least two sub-areas and establish a device group for each sub-area, all smart devices being located in the predetermined area; and a device grouping module configured to, for each sub-area divided by the area dividing module, add device information of one or more of the smart devices which are located in the sub-area into a device group corresponding to the sub-area.

Optionally, the group querying module comprises: an area determining sub-module configured to determine a sub-area including the position; and an area querying sub-module configured to query the device group corresponding to the sub-area determined by the area determining sub-module.

Optionally, the area determining sub-module is configured to: determine a smart device whose distances from the position is less than a predetermined distance threshold; acquire a sub-area corresponding to the smart device; and determine the acquired sub-area as the sub-area including the position.

Optionally, the apparatus further comprises: a second displaying module configured to add all of at least one remaining device group to a label and display the label; or a third displaying module configured to generate a label for each remaining device group and display each label.

Optionally, the apparatus further comprises: an operation receiving module configured to receive an operation acting on a label; and a fourth displaying module configured to display device information of each smart device in the device group corresponding to the label.

According to a third aspect of the embodiments of the present invention, there is provided a device displaying apparatus, comprising: a processor; and a memory configured to store instructions executable by the processor. The processor is configured to: acquire a terminal's position; query a device group corresponding to the position, the device group being obtained after all smart devices bound with the terminal are grouped; and display device information of each smart device in the queried device group.

In one particular embodiment, the steps of the device displaying method are determined by computer program instructions.

Consequently, according to a fourth aspect, the invention is also directed to a computer program for executing the steps of the device displaying method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of this invention may produce the following advantageous effects.

A terminal's position is acquired, and device information of each smart device in the device group corresponding to the position is displayed. Considering that it is highly likely for a user to control nearby smart devices, the device group including the user's nearby smart devices can be thus selected from all device groups, and only device information of the selected device group is displayed while device information of other device groups is not displayed, thereby addressing the difficulty in managing device information when all device information is displayed and simplifying the management of device information.

Further, by dividing a predetermined area into at least two sub-areas and establishing a device group for each sub-area and by adding, for each sub-area, device information of one or more smart devices in the sub-area into a device group corresponding to the sub-area, the predetermined area may be divided into sub-areas such as a bedroom, a dining room, a kitchen and a balcony. Thus, there is a high possibility for the user to be located in one of the sub-areas, and such division into sub-areas can improve the accuracy of device grouping.

Further, by adding all of at least one remaining device group to a label and displaying the label or by generating a label for each remaining device group and displaying each label, an entry can be provided for looking up device information of other smart devices so as to facilitate control of other smart devices by the user.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a device displaying method according to an exemplary embodiment of the invention.
Fig. 2A is a flow chart showing a device displaying method according to another exemplary embodiment of the invention.
Fig. 2B is a schematic diagram of a first scheme of displaying device groups according to an exemplary embodiment of the invention.
Fig. 2C is a schematic diagram of a second scheme of displaying device groups according to an exemplary embodiment of the invention.
Fig. 2D is a schematic diagram of a third scheme of displaying device groups according to an exemplary embodiment of the invention.
Fig. 3 is a block diagram of a device displaying apparatus according to an exemplary embodiment of the invention.
Fig. 4 is a block diagram of a device displaying apparatus according to another exemplary embodiment of the invention.
Fig. 5 is a block diagram of a device displaying apparatus according to yet another exemplary embodiment of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

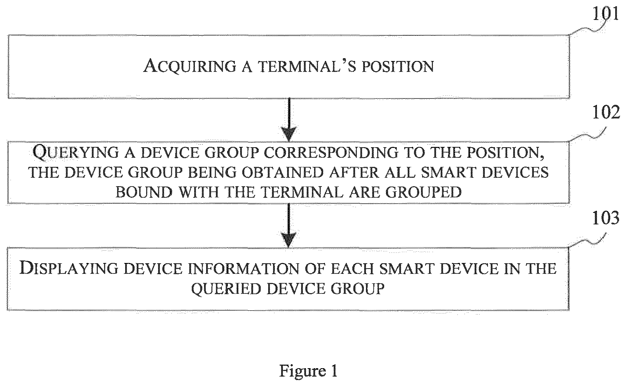

Fig. 1 is a flow chart showing a device displaying method according to an embodiment of the invention. The method is applied in a terminal and, as shown in Fig. 1, comprises the following steps.

In step 101, the terminal's position is acquired.

In step 102, a device group corresponding to the position is queried, the device group being obtained after all smart devices bound with the terminal are grouped.

In step 103, device information of each smart device in the queried device group is displayed.

To sum up, with the device displaying method of this invention, a terminal's position is acquired, and device information of each smart device in the device group corresponding to the position is displayed. Considering that it is highly likely for a user to control nearby smart devices, the device group including the user's nearby smart devices can be thus selected from all device groups, and only device information of the selected device group is displayed while device information of other device groups is not displayed, thereby addressing the difficulty in managing device information when all device information is displayed and simplifying the management of device information.

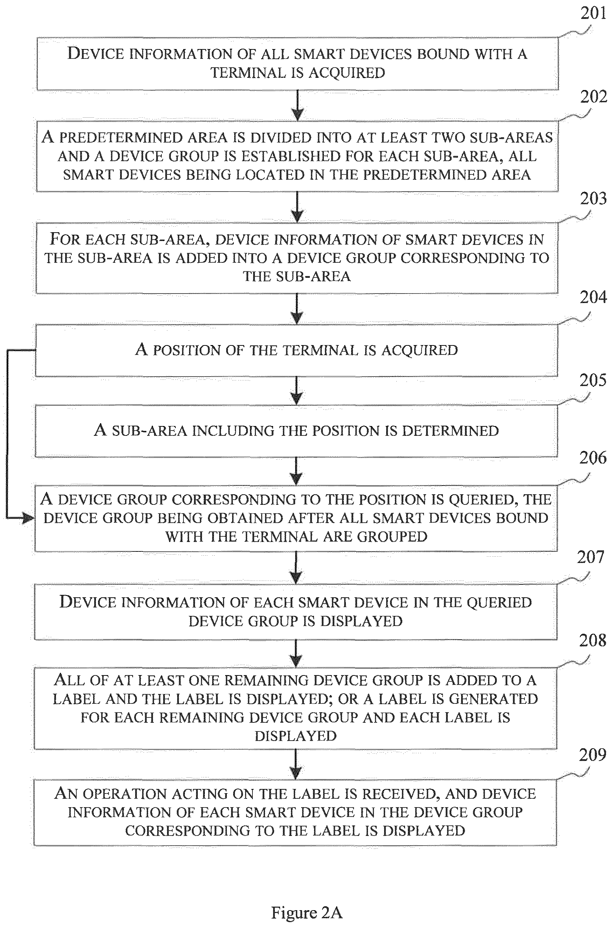

Fig. 2A is a flow chart showing a device displaying method according to another exemplary embodiment of the invention. The method is applied in a terminal and, as shown in Fig. 2A, comprises steps 201-209.

In step 201, device information of all smart devices bound with the terminal is acquired.

The smart devices in this embodiment refer to devices bound with a user account logged-in in the terminal. In an implementation, the user account may be bound with device identifiers of smart devices. In a possible implementation, the terminal and the smart devices all access to a designated router or gateway, and then the terminal may acquire the device identifiers of the smart devices. In another possible implementation, each smart device periodically broadcasts its own device identifier, and the terminal may receive the device identifier of the smart device. Next, the terminal generates a binding request that carries the user account and the device identifier and sends the binding request to a server, and the server binds the user account and the device identifier according to the binding request.

When bound with a device identifier of a smart device, the terminal may record the device identifier of the smart device. Then, the terminal may read all recorded device identifiers to obtain device information corresponding to each device identifier. Alternatively, the terminal may acquire each bound device identifier from a server to obtain device information corresponding to each device identifier. The device information is used for describing a smart device, and may include ID, name, type, image-text description, function introduction, manufacturer and the like of the smart device, which will not be limited in this embodiment.

In step 202, a predetermined area is divided into at least two sub-areas and a device group is established for each sub-area, all smart devices being located in the predetermined area.

With the popularization of smart devices, the number of smart devices bound with a user account is increasing. For ease of management, a terminal may group the smart devices. The terminal may group the smart devices according to the functions of the smart devices, and may also group the smart devices according to positions of the smart devices. In the following, an example in which the smart devices are grouped according to the positions of the smart devices will be taken for illustration.

Because the smart devices may be distributed at any positions, the terminal needs to first determine a predetermined area including all the smart devices and then divide the predetermined area. In a possible scene, the smart devices are distributed in a user's home. Then, the predetermined area may be an area in the user's home. In another possible scene, the smart devices are distributed in a user's company. Then, the predetermined area may be an area in the user's company.

When the predetermined area is divided, the area may be divided into sub-areas according to actual division of space. For example, when the predetermined area is an area in the home, the sub-areas may be a bedroom, a dining room, a kitchen, a balcony, etc. When the predetermined area is an area in a company, the sub-areas may be a working area, a conference room, a rest room, etc. Because the user is highly likely to be located in one of the above sub-areas, such division into sub-areas may improve the accuracy of device grouping. Alternatively, the area may be divided into sub-areas according to a size of area. For example, the predetermined area is equally divided into three sub-areas according to a size of area. The specific manner for division into sub-areas is not limited in this embodiment.

In step 203, for each sub-area, device information of smart devices in the sub-area is added into a device group corresponding to the sub-area.

After each sub-area is obtained, the terminal establishes a device group for the sub-area. In a first possible implementation, a widget "establish new device group" is displayed by the terminal; the user is prompted to input a name of the device group, when the terminal receives a signal resulting from the user's clicking the widget; after receiving the name, an input box is provided for the user to input the device information, or all device information are displayed for the user to select therefrom; and the device information input or selected by the user is added to the device group. In a second possible implementation, when the terminal receives a signal of moving a display position of device information, it is detected whether or not the moved display position of the device information coincides with a display position of other device information; when they coincide, it is determined to establish a new device group, and the moved device information and the other device information are added to this device group; and when the terminal receives a signal of moving certain device information into this device group, the device information is added to this device group. In a third possible implementation, a position where the terminal is located currently is acquired; a device group corresponding to the position is established; and device information of smart devices, whose distances from the position are less than a predetermined distance threshold, are added to the device group.

For the third implementation, in a possible implementation scene, the user holds the terminal in a bedroom, and the terminal automatically establishes a device group "bedroom" and adds device information of smart terminals in the bedroom to the device group "bedroom". Then, the user holds the terminal in a kitchen, and the terminal automatically establishes a device group "kitchen" and adds device information of smart devices in the kitchen to the device group "kitchen". As such, the operation of establishing the device group is simplified, and the establishing efficiency is improved.

In step 204, a position of the terminal is acquired.

The terminal may acquire the position using a WiFi (Wireless Fidelity) technology, an infrared technology, a Bluetooth technology, a radio frequency technology etc. or through a positioning system such as a GPS (Global Positioning System).

Alternatively or additionally, a smart device may acquire the position of the terminal and then send the position to the terminal. For example, a camera in the bedroom captures that the user holds the terminal in the bedroom, determines that the position where the terminal is located is in the bedroom and sends the position to the terminal. As another example, a door magnetic sensor installed in a door of the bedroom senses that the user enters the bedroom with the terminal in his hand, determines that the position where the terminal is located is in the bedroom and sends the position to the terminal.

Of course, the terminal may acquire the position in other ways, which will be not limited in this embodiment.

In step 205, a sub-area including the position is determined.

This step is an optional step. When the position of the terminal is represented by a sub-area, step 206 is directly executed while step 205 is not executed. When the position of the terminal is not represented by a sub-area, step 205 is executed.

Determining the sub-area including the position comprises:
1) determining a smart devices whose distance from the position is less than a predetermined distance threshold;
2) acquiring a sub-area corresponding to the smart device; and
3) determining the acquired sub-area as the sub-area including the position.

The terminal calculates a distance between a position of each smart terminal and the position of the terminal, finds a smart device whose distance from the position is less than a predetermined distance threshold, and determines that the sub-area to which the smart device belongs includes the position of the terminal when the smart device is found. The distance between each smart device and the terminal may be determined according to received signal strength.

In step 206, a device group corresponding to the position is queried, the device group being obtained after all smart devices bound with the terminal are grouped.

Because correspondences between sub-areas and device groups are prestored in the terminal, the terminal may query the device group corresponding to the sub-area after determining the sub-area including the position of the terminal.

In step 207, device information of each smart device in the queried device group is displayed.

In related arts, the terminal may display all device information according to a rule regarding the binding time of each smart device, the name of the device information or the like. When there is too much device information, it is inconvenient to look up certain device information. However, in this embodiment, a sub-area where the terminal is located is a sub-area where the user is located. Because it is highly likely for the user to operate smart devices in the sub-area, the terminal can display only the device information in the device group corresponding to the sub-area, thereby reducing displayed device information and improving the efficiency of looking up the device information.

In step 208, all of at least one remaining device group is added to a label and the label is displayed; or a label is generated for each remaining device group and each label is displayed.

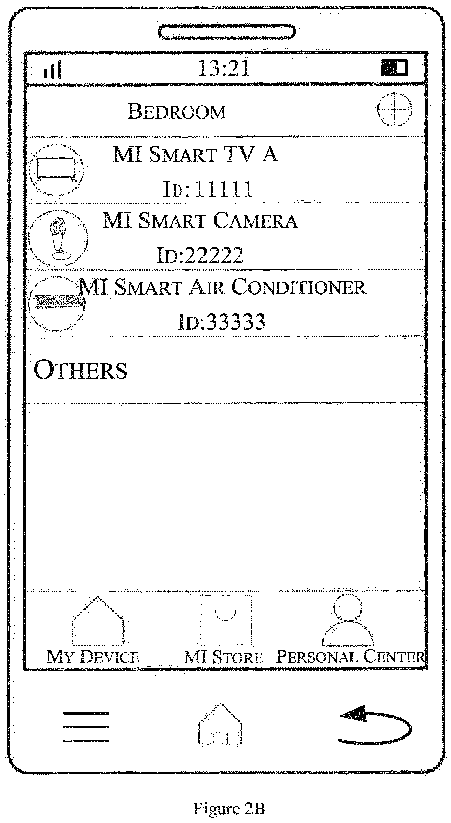

For the remaining device groups, the terminal may add all these device groups to a label and display the label, thereby reducing contents displayed in the terminal and facilitating looking up the device information. Referring to the schematic diagram of a first scheme of displaying device groups as shown in Fig. 2B, the device group displayed in Fig. 2B is "bedroom", and the device group "bedroom" includes a "smart TV A", a "smart camera" and a "smart air conditioner". All the remaining device groups are added to a label "others".

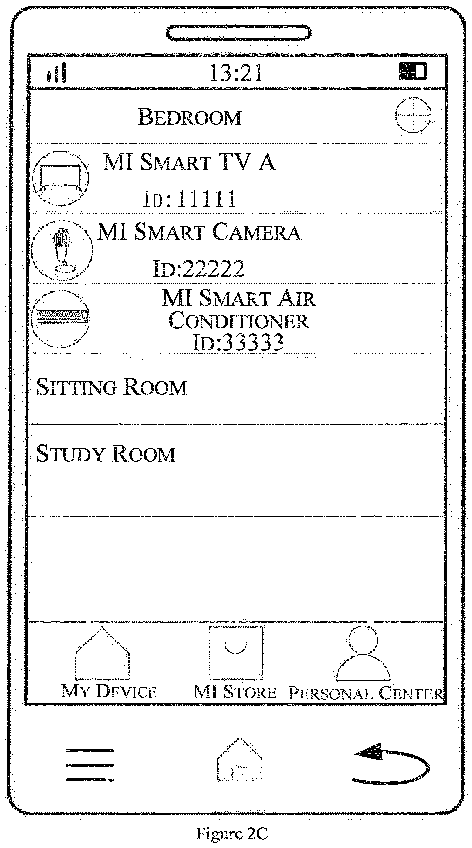

The terminal may also generate a label for each remaining device group and display each label. Because only labels are displayed while device information included in each label is not displayed, contents displayed in the terminal can also be reduced to facilitate looking up the device information. Referring to the schematic diagram of a second scheme of displaying device groups as shown in Fig. 2C, the device group displayed in Fig. 2C is "bedroom", and the device group "bedroom" includes a "smart TV A", a "smart camera" and a "smart air conditioner". A label "sitting room" and a label "study room" are generated for the remaining device group "sitting room" and the remaining device group "study room" respectively, and are displayed.

In step 209, an operation acting on a label is received, and device information of each smart device in the device group corresponding to the label is displayed.

The user may click a label displayed by the terminal when needing to view device information in other device groups. When receiving an operation acting on a certain label, the terminal reads at least one device group corresponding to the label and displays device information included in each of the at least one device group.

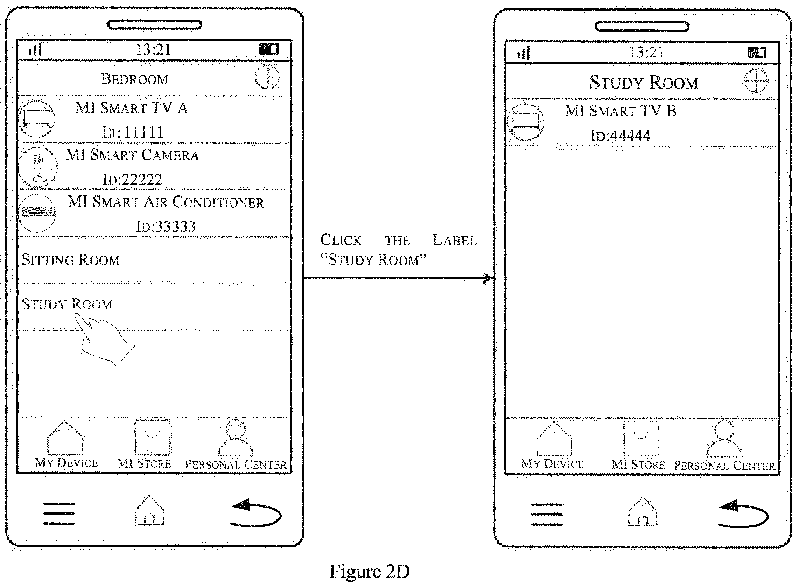

Referring to the schematic diagram of a third scheme of displaying device groups as shown in Fig. 2D, a "smart TV A", a "smart camera", a "smart air conditioner" included in the device group "bedroom" and a label "study room" are displayed in the left view of Fig. 2D. After the user clicks the label "study room", a "smart TV B" included in the device group "study room" is displayed, as shown in the right view of Fig. 2D.

To sum up, with the device displaying method of this invention, a terminal's position is acquired, and device information of each smart device in the device group corresponding to the position is displayed. Considering that it is highly likely for a user to control nearby smart devices, the device group including the user's nearby smart devices can be thus selected from all device groups, and only device information of the selected device group is displayed while device information of other device groups is not displayed, thereby addressing the difficulty in managing device information when all device information is displayed and simplifying the management of device information.

Further, by dividing a predetermined area into at least two sub-areas and establishing a device group for each sub-area and by adding, for each sub-area, device information of one or more smart devices in the sub-area into a device group corresponding to the sub-area, the predetermined area may be divided into sub-areas such as a bedroom, a dining room, a kitchen and a balcony. Thus, there is a high possibility for the user to be located in one of the sub-areas, and such division into sub-areas can improve the accuracy of device grouping.

Further, by adding all of at least one remaining device group to a label and displaying the label or by generating a label for each remaining device group and displaying each label, an entry can be provided for looking up device information of other smart devices so as to facilitate control of other smart devices by the user.

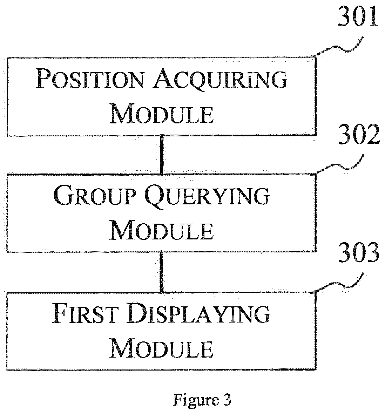

Fig. 3 is a block diagram of a device displaying apparatus according to an exemplary embodiment of the invention. The apparatus is applied in a terminal and, as shown in Fig. 3, comprises: a position acquiring module 301, a group querying module 302 and a first displaying module 303.

The position acquiring module 301 is configured to acquire the terminal's position.

The group querying module 302 is configured to query a device group corresponding to the position acquired by the position acquiring module 301, the device group being obtained after all smart devices bound with the terminal are grouped.

The first displaying module 303 is configured to display device information of each smart device in the device group queried by the group querying module 302.

To sum up, with the device displaying apparatus of this invention, a terminal's position is acquired, and device information of each smart device in the device group corresponding to the position is displayed. Considering that it is highly likely for a user to control nearby smart devices, the device group including the user's nearby smart devices can be thus selected from all device groups, and only device information of the selected device group is displayed while device information of other device groups is not displayed, thereby addressing the difficulty in managing device information when all device information is displayed and simplifying the management of device information.

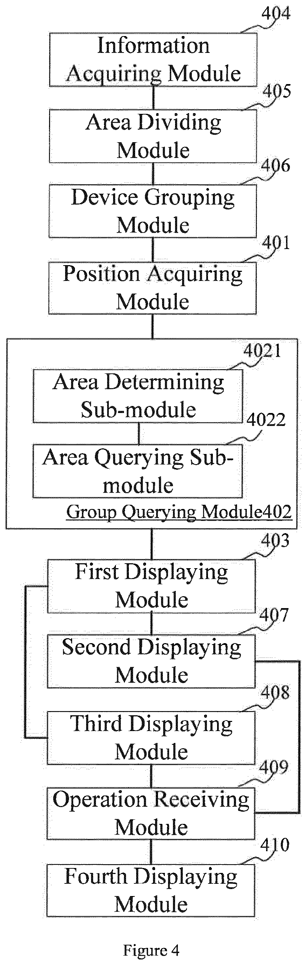

Fig. 4 is a block diagram of a device displaying apparatus according to another exemplary embodiment of the invention. The apparatus is applied in a terminal and, as shown in Fig. 4, comprises: a position acquiring module 401, a group querying module 402 and a first displaying module 403.

The position acquiring module 401 is configured to acquire the terminal's position.

The group querying module 402 is configured to query a device group corresponding to the position acquired by the position acquiring module 401, the device group being obtained after all smart devices bound with the terminal are grouped.

The first displaying module 403 is configured to display device information of each smart device in the device group queried by the group querying module 402.

Optionally, the apparatus further comprises: an information acquiring module 404, an area dividing module 405 and a device grouping module 406.

The information acquiring module 404 is configured to acquire device information of all smart devices bound with the terminal.

The area dividing module 405 is configured to divide a predetermined area into at least two sub-areas and establish a device group for each sub-area, all smart devices being located in the predetermined area.

The device grouping module 406 is configured to, for each sub-area formed by division by the area dividing module, add device information of one or more of the smart devices which are located in the sub-area into a device group corresponding to the sub-area.

Optionally, the group querying module 402 comprises: an area determining sub-module 4021 and an area querying sub-module 4022.

The area determining sub-module 4021 is configured to determine a sub-area including the position.

The area querying sub-module 4022 is configured to query the device group corresponding to the sub-area determined by the area determining sub-module.

Optionally, the area determining sub-module 4021 is configured to: determine a smart device whose distance from the position is less than a predetermined distance threshold; acquire a sub-area corresponding to the smart device; and determine the acquired sub-area as the sub-area including the position.

Optionally, the apparatus further comprises: a second displaying module 407 or a third displaying module 408.

The second displaying module 407 is configured to add all of at least one remaining device group to a label and display the label.

The third displaying module 408 is configured to generate a label for each remaining device group and display each label.

Optionally, the apparatus further comprises: an operation receiving module 409 and a fourth displaying module 410.

The signal receiving module 409 is configured to receive an operation acting on the label.

The fourth displaying module 410 is configured to display device information of each smart device in the device group corresponding to the label.

To sum up, with the device displaying apparatus of this invention, a terminal's position is acquired, and device information of each smart device in the device group corresponding to the position is displayed. Considering that it is highly likely for a user to control nearby smart devices, the device group including the user's nearby smart devices can be thus selected from all device groups, and only device information of the selected device group is displayed while device information of other device groups is not displayed, thereby addressing the difficulty in managing device information when all device information is displayed and simplifying the management of device information.

Further, by dividing a predetermined area into at least two sub-areas and establishing a device group for each sub-area and by adding, for each sub-area, device information of one or more smart devices in the sub-area into a device group corresponding to the sub-area, the predetermined area may be divided into sub-areas such as a bedroom, a dining room, a kitchen and a balcony. Thus, there is a high possibility for the user to be located in one of the sub-areas, and such division into sub-areas can improve the accuracy of device grouping.

Further, by adding all of at least one remaining device group to a label and displaying the label or by generating a label for each remaining device group and displaying each label, an entry can be provided for looking up device information of other smart devices so as to facilitate control of other smart devices by the user.

Regarding the apparatuses in the above embodiments, the specific manners for the respective modules to perform operations have been described in the method embodiments, and will not be elaborated herein.

An exemplary embodiment of this invention provides a device displaying apparatus, which can implement the device displaying method of this invention. The apparatus comprises: a processor; and a memory configured to store instructions executable by the processor. The processor is configured to: acquire a terminal's position; query a device group corresponding to the position, the device group being obtained after all smart devices bound with the terminal are grouped; and display device information of each smart device in the queried device group.

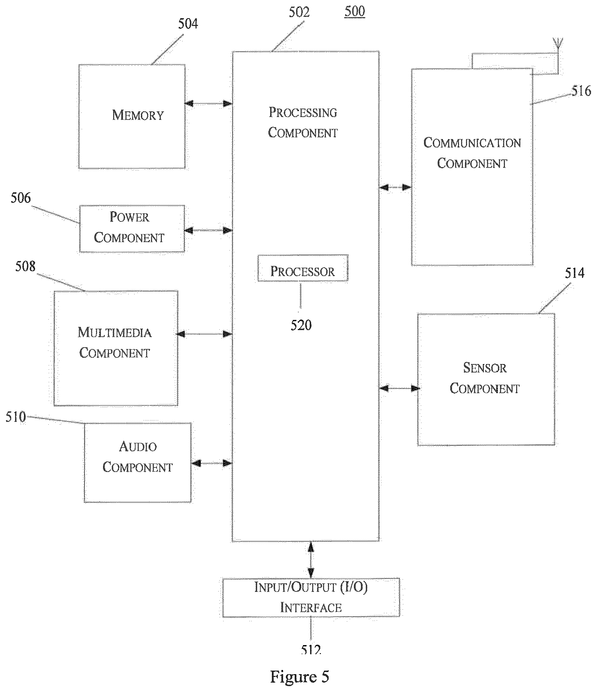

Fig. 5 is a block diagram of a device displaying apparatus 500 according to yet another exemplary embodiment of the invention. For example, the apparatus 500 may be a mobile phone, a computer, a digital broadcast terminal, a message transceiver device, a game console, a tablet device, a medical device, fitness equipment, a personal digital assistant or the like.

Referring to Fig. 5, the apparatus 500 may comprise one or more following components: a processing component 502, a memory 504, a power component 506, a multimedia component 508, an audio component 510, an input/output (I/O) interface 512, a sensor component 514 and a communication component 516.

The processing component 502 typically controls overall operations of the apparatus 500, such as the operations associated with display, phone calls, data communications, camera operations and recording operations. The processing component 502 may include one or more processors 520 to execute instructions to perform all or part of the steps in the above described methods. Moreover, the processing component 502 may include one or more modules which facilitate the interaction between the processing component 502 and other components. For example, the processing component 502 may comprise a multimedia module to facilitate the interaction between the multimedia component 508 and the processing component 502.

The memory 504 is configured to store various types of data to support operations of the apparatus 500. Examples of such data comprise instructions for any applications or methods operated on the apparatus 500, various kinds of data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may comprise a power supply management system, one or more power sources, and any other components associated with the generation, management, and distribution of power in the apparatus 500.

The multimedia component 508 comprises a screen providing an output interface between the apparatus 500 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 comprises one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, presence or absence of user's contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 504, executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A device displaying method, comprising:
acquiring (101) a terminal's position;
querying (102) a device group corresponding to the terminal's position, the device group being obtained after all smart devices bound with the terminal are grouped; and
displaying (103) device information of each smart device in the queried device group.

2. The method according to claim 1, further comprising:
acquiring (201) device information of all smart devices bound with the terminal;
dividing (202) a predetermined area into at least two sub-areas, and establishing a device group for each sub-area, all smart devices being located in the predetermined area; and
for each sub-area, adding (203) device information of one or more of the smart devices which are located in the sub-area into a device group corresponding to the sub-area.

3. The method according to claim 2, wherein querying the device group corresponding to the position comprises:
determining (205) a sub-area including the position; and
querying (206) the device group corresponding to the sub-area.

4. The method according to claim 3, wherein determining the sub-area including the position comprises:
determining a smart device whose distance from the position is less than a predetermined distance threshold;
acquiring a sub-area corresponding to the smart device; and
determining the acquired sub-area as the sub-area including the position.

5. The method according to any of claims 1 to 4, further comprising:
adding all of at least one remaining device group to a label, and displaying the label; or
generating (208) a label for each remaining device group, and displaying each label.

6. The method according to claim 5, further comprising:
receiving an operation acting on a label; and
displaying (209) device information of each smart device in the device group corresponding to the label.

7. A device displaying apparatus, comprising:
a position acquiring module (301; 401) configured to acquire a terminal's position;
a group querying module (302; 402) configured to query a device group corresponding to the terminal's position acquired by the position acquiring module, the device group being obtained after all smart devices bound with the terminal are grouped; and
a first displaying module (303; 403) configured to display device information of each smart device in the device group queried by the group querying module.

8. The apparatus according to claim 7, further comprising:
an information acquiring module (404) configured to acquire device information of all smart devices bound with the terminal;
an area dividing module (405) configured to divide a predetermined area into at least two sub-areas and establish a device group for each sub-area, all smart devices being located in the predetermined area; and
a device grouping module (406) configured to, for each sub-area formed by division by the area dividing module, add device information of one or more of the smart devices which are located in the sub-area into a device group corresponding to the sub-area.

9. The apparatus according to claim 8, wherein the group querying module (402) comprises:
an area determining sub-module (4021) configured to determine a sub-area including the position; and
an area querying sub-module (4022) configured to query the device group corresponding to the sub-area determined by the area determining sub-module.

10. The apparatus according to claim 9, wherein the area determining sub-module (4021) is configured to:
determine a smart device whose distance from the position is less than a predetermined distance threshold;
acquire a sub-area corresponding to the smart device; and
determine the acquired sub-area as the sub-area including the position.

11. The apparatus according to any of claims 7 to 10, further comprising:
a second displaying module (407) configured to add all of at least one remaining device group to a label and display the label; or
a third displaying module (408) configured to generate a label for each remaining device group and display each label.

12. The apparatus according to claim 11, further comprising:
an operation receiving module (409) configured to receive an operation acting on a label; and
a fourth displaying module (410) configured to display device information of each smart device in the device group corresponding to the label.

13. A device displaying apparatus, comprising:
a processor (520); and
a memory (504) configured to store instructions executable by the processor (520), wherein the processor (520) is configured to perform the method according to any of claims 1 to 6.

14. A computer program including instructions for executing the steps of a device displaying method according to any one of claims 1 to 6, when said program is executed by a computer.

15. A recording medium readable by a computer and having recorded thereon a computer program including instructions for executing the steps of a device displaying method according to any one of claims 1 to 6.
